(19) Europäisches Patentamt
European Patent Office
Office européen des brevets

(11) **EP 4 053 216 A1**

(12) **EUROPEAN PATENT APPLICATION**
published in accordance with Art. 153(4) EPC

(43) Date of publication:
**07.09.2022 Bulletin 2022/36**

(21) Application number: **20880853.5**

(22) Date of filing: **10.09.2020**

(51) International Patent Classification (IPC):
*C08L 75/06* (2006.01)     *C08G 18/08* (2006.01)
*C08G 18/44* (2006.01)     *D06N 3/14* (2006.01)

(52) Cooperative Patent Classification (CPC):
**C08G 18/08; C08G 18/44; C08L 75/06; D06N 3/14**

(86) International application number:
**PCT/JP2020/034210**

(87) International publication number:
**WO 2021/084922 (06.05.2021 Gazette 2021/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.10.2019 JP 2019195229**

(71) Applicant: **DIC Corporation
Tokyo 174-8520 (JP)**

(72) Inventor: **MAEDA Ryo
Takaishi-shi, Osaka 592-0001 (JP)**

(74) Representative: **Gerauer, Marc Philippé
Kraus & Weisert
Patentanwälte PartGmbB
Thomas-Wimmer-Ring 15
80539 München (DE)**

(54) **URETHANE RESIN COMPOSITION AND LEATHER SHEET**

(57)     A problem addressed by the present invention is to provide a urethane resin composition having an excellent texture and formulation stability in a urethane resin composition that contains water. A urethane resin composition characterized by containing a urethane resin (A) having an anionic group and a nonionic group, that employs a polycarbonate polyol (a1) that is liquid at normal temperature as a raw material and does not employ compounds (x2) having three or more hydroxyl groups as a raw material, a nonionic emulsifier (B), and water (C). In addition, the present invention provides a leather sheet characterized in that a coagulated product of the urethane resin composition is present in a fiber base material. The urethane resin (A) and the nonionic emulsifier (B) both preferably have an oxyethylene group and an oxypropylene group.

EP 4 053 216 A1

**Description**

Technical Field

The present invention relates to a urethane resin composition and a leather sheet.

Background Art

Polyurethane resins have been widely used in the production of synthetic leather (including artificial leather) because of their high mechanical strength and excellent texture. Solvent-based urethane resins containing N,N-dimethylformamide (DMF) have been mainly used for the production of synthetic leather. However, elimination of the usage of DMF in urethane resins for layers constituting synthetic leather has been demanded against the backdrop of, for example, tightening DMF control in Europe, tightening VOC emission control in China and Taiwan, and tightening DMF control in major apparel companies.

To respond to such environment, a urethane resin composition in which a urethane resin is dispersed in water has been broadly studied (for example, see PTL 1). However, in the existing urethane resin compositions including a urethane resin composition described in PTL 1, it was difficult to achieve both excellent texture and liquid mixture stability.

Citation List

Patent Literature

PTL 1: Japanese Unexamined Patent Application Publication No. 2007-119749

Summary of Invention

Technical Problem

An object of the present invention is to provide a water-containing urethane resin composition that is excellent in texture and liquid mixture stability.

Solution to Problem

The present invention provides a urethane resin composition including: a urethane resin (A) having an anionic group and a nonionic group, and produced using as a raw material polycarbonate polyol (a1) that is liquid at normal temperature and not using as a raw material a compound (x2) having three or more hydroxyl groups; a nonionic emulsifier (B); and water (C).

The present invention further provides a leather sheet in which a coagulated product of the above-mentioned urethane resin composition is present in a fibrous substrate.

Advantageous Effects of Invention

A urethane resin composition according to the present invention contains water, and thus the urethane resin composition is an environment-responsive material. Furthermore, the urethane resin composition is excellent in texture and liquid mixture stability. Hence, the urethane resin composition can be particularly suitably used as a resin for the impregnation of fibrous substrates.

Description of Embodiments

A urethane resin composition according to the present invention includes: a urethane resin (A) having an anionic group and a nonionic group, and produced using as a raw material polycarbonate polyol (a1) that is liquid at normal temperature and not using as a raw material a compound (x2) having three or more hydroxyl groups; a nonionic emulsifier (B); and water (C).

To achieve excellent texture, the urethane resin (A) used in the present invention essentially includes the polycarbonate polyol (a1) that is liquid at normal temperature. Note that, in the present invention, the expression "liquid at normal temperature" indicates that the polycarbonate polyol (a1) is a liquid or a viscous material having flowability at 23°C. Examples of the polycarbonate polyol (a1) that can be used include a reaction product of a compound having two or more hydroxyl groups with carbonate and/or phosgene.

Examples of the compound having two or more hydroxyl groups that can be used include propanediol, butanediol, pentanediol, hexanediol, decanediol, caprolactone, cyclohexanedimethanol, 3-methyl-1,5-pentanediol, neopentyl glycol, and isosorbide. These compounds may be used alone or in combination of two or more. From the viewpoints of achieving more excellent texture, heat resistance, and hydrolysis resistance, a compound being a liquid at normal temperature, such as a combination of butanediol and hexanediol and/or a combination of pentanediol and hexanediol, is preferably used.

Examples of the carbonate that can be used include dimethyl carbonate, diethyl carbonate, diphenyl carbonate, ethylene carbonate, and propylene carbonate. These compounds may be used alone or in combination of two or more.

From the viewpoints of achieving more excellent texture, heat resistance, and hydrolysis resistance, the number average molecular weight of the polycarbonatediol (a1) is preferably within a range of 500 to 10,000, and more preferably within a range of 700 to 4,000. Note that the number average molecular weight of the polycarbonate polyol (a1) is a value determined by gel permeation chromatography (GPC).

The urethane resin (A) used in the present invention is produced not using as a raw material the compound (x2) having three or more hydroxyl groups. If the urethane resin is produced using the compound (x2), the urethane resin has a cross-linking structure, whereby the texture is impaired.

Examples of the compound (x2) that can be used include trimethylolpropane and glycerin. These compounds may be used alone or in combination of two or more.

To achieve both excellent texture and liquid mixture stability, the urethane resin (A) essentially has an anionic group and a nonionic group. The anionic group and the nonionic group are supplied from an anionic group-containing compound (a2) and a nonionic group-containing compound (a3), respectively.

Examples of the anionic group-containing compound (a2) that can be used include: carboxyl group-containing compounds, such as 2,2-dimethylolpropionic acid, 2,2-dimethylolbutanoic acid, 2,2-dimethylolbutyric acid, 2,2-dimethylolpropionic acid, and 2,2-valeric acid; and sulfonyl group-containing compounds, such as 3,4-diaminobutanesulfonic acid, 3,6-diamino-2-toluenesulfonic acid, 2,6-diaminobenzenesulfonic acid, N-(2-aminoethyl)-2-aminosulfonic acid, N-(2-aminoethyl)-2-aminoethylsulfonic acid, N-2-aminoethane-2-aminosulfonic acid, and N-(2-aminoethyl)-β-alanine, and salts thereof. These compounds may be used alone or in combination of two or more.

Examples of the nonionic group-containing compound (a3) that can be used include compounds having an oxyethylene structure and/or an oxypropylene group, such as polyethylene glycol, polyoxypropylene glycol, polyoxyethylene polyoxypropylene glycol, polyoxyethylene polyoxytetramethylene glycol, and polyethylene glycol monomethyl ether. These compounds may be used alone or in combination of two or more.

From the viewpoints of achieving more excellent texture and liquid mixture stability, the nonionic group contained in the urethane resin (A) used in the present invention preferably includes an oxyethylene group and an oxypropylene group. When these low crystalline components are incorporated into a main chain of the urethane resin (A), more excellent texture and liquid mixture stability can be achieved, and therefore, the oxyethylene group and the oxypropylene group are preferably introduced by a polyol having an oxyethylene group and an oxypropylene group, and more preferably introduced by polyoxyethylene polyoxypropylene glycol.

From the viewpoints of achieving more excellent texture and liquid mixture stability, the number average molecular weight of the polyoxyethylene polyoxypropylene glycol is preferably within a range of 500 to 10,000, and more preferably within a range of 1,000 to 4,000. Note that the number average molecular weight of the polyoxyethylene polyoxypropylene glycol is a value determined by GPC.

From the viewpoints of achieving more excellent texture and liquid mixture stability, the molar ratio (EO/PO) of the oxyethylene group (EO) to the oxypropylene group (PO) in the urethane resin (A) is preferably within a range of 20/80 to 90/10, and more preferably within a range of 40/60 to 85/15.

From the viewpoint of achieving more excellent hydrolysis resistance, textures, and liquid mixture stability, the amount of usage of the nonionic group-containing compound (a3) in the raw materials constituting the urethane resin (A) is preferably within a range of 0.1% by mass to 20% by mass, and more preferably 0.5% by mass to 15% by mass.

Specific examples of the urethane resin (A) that can be used include a reaction product of a polyol including the polycarbonate polyol (a1), the anionic group-containing compound (a2), the nonionic group-containing compound (a3), and polyisocyanate (a4).

As the polyol, other polyols may be used in combination with the polycarbonate polyol (a1), unless advantageous effects of the present invention are impaired. Examples of other polyols that can be used include polycarbonate polyols, polyester polyols, polyether polyols, and polyacrylic polyols, each being solid at normal temperature. These polyols may be used alone or in combination of two or more. The number average molecular weight of these polyols is, for example, within a range of 500 to 100,000. The number average molecular weight of the polyol is a value determined by GPC.

The polyol may be used in combination with a chain extender having a number average molecular weight preferably within a range of 50 to 450, if necessary. Note that the number average molecular weight of the chain extender is a value calculated from a chemical structural formula.

Examples of the chain extender that can be used include: hydroxyl group-containing chain extenders, such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerin, sorbitol, bisphenol A, 4,4'-dihydroxydiphenyl, and 4,4'-dihydroxydiphenyl ether; and amino group-containing chain extenders, such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, and hydrazine. These chain extenders may be used alone or in combination of two or more. From the viewpoints of achieving more excellent hydrolysis resistance and light resistance, among these chain extenders, the amino group-containing chain extenders are preferably used.

Examples of the polyisocyanate (a4) that can be used include: aromatic polyisocyanates, such as phenylene diisocyanate, toluene diisocyanate, diphenylmethane diisocyanate, naphthalene diisocyanate, polymethylene polyphenyl polyisocyanate, and carbodiimidated diphenylmethane polyisocyanate; and aliphatic or alicyclic polyisocyanates, such as hexamethylene diisocyanate, lysine diisocyanate, dimer acid diisocyanate, cyclohexane diisocyanate, isophorone diisocyanate, dicyclohexylmethane diisocyanate, xylylene diisocyanate, tetramethylxylylene diisocyanate, and norbornene diisocyanate. These polyisocyanates may be used alone or in combination of two or more. From the viewpoint of achieving more excellent light resistance, among these polyisocyanates, aliphatic polyisocyanates and/or alicyclic polyisocyanates are preferably used, and alicyclic polyisocyanates are more preferably used.

Examples of a method for producing the urethane resin (A) include a method in which the raw materials are mixed at once and allowed to react. Examples of a method for the reaction include a method in which the reaction is performed at a temperature of 50°C to 100°C for 3 hours to 10 hours.

When the urethane resin (A) is produced, an isocyanate group remaining in the urethane resin (A) is preferably deactivated. To deactivate the isocyanate group, an alcohol having a hydroxyl group, such as methanol, is preferably used. The amount of usage of the alcohol, if used, is preferably within a range of 0.001 part by mass to 10 parts by mass, with respect to 100 parts by mass of the urethane resin (A).

When the urethane resin (A) is produced, an organic solvent may be used. Examples of the organic solvent that can be used include: ketone compounds, such as acetone and methyl ethyl ketone; ether compounds, such as tetrahydrofuran and dioxane; acetate compounds, such as ethyl acetate and butyl acetate; nitrile compounds, such as acetonitrile; and amide compounds, such as dimethylformamide and N-methylpyrrolidone. These organic solvents may be used alone or in combination of two or more. Note that the organic solvent is preferably removed in the end, for example, by a distillation method.

From the viewpoints of achieving more excellent hydrolysis resistance, flexibility, and texture, the acid value of the urethane resin (A) is preferably within a range of 0.1 mgKOH/g to 15 mgKOH/g, and more preferably within a range of 1 mgKOH/g to 8 mgKOH/g. The acid value of the urethane resin (A) can be adjusted using the amount of the anionic group-containing compound (a2). A method for measuring the acid value will be described later in Examples.

From the viewpoints of achieving more excellent hydrolysis resistance, light resistance, and heat resistance, the weight-average molecular weight of the urethane resin (A) is preferably within a range of 50,000 to 700,000, and more preferably within a range of 100,000 to 500,000. Note that the weight-average molecular weight of the urethane resin (A) is a value determined by GPC under the following conditions.

The nonionic emulsifier (B) is an essential component for achieving excellent texture and liquid mixture stability.

Examples of the nonionic emulsifier (B) that can be used include: emulsifiers having an oxyethylene group, such as polyoxyethylene nonylphenyl ether, polyoxyethylene octylphenyl ether, polyoxyethylene distyrenated phenyl ether, polyoxyethylene lauryl ether, polyoxyethylene oleyl ether, polyoxyethylene stearyl ether, and polyoxyethylene sorbitol tetraoleate; and emulsifiers having an oxyethylene group and an oxypropylene group, such as a polyoxyethylene-polyoxypropylene copolymer. These nonionic emulsifiers may be used alone or in combination of two or more.

From the viewpoints of achieving more excellent texture and liquid mixture stability, among these nonionic emulsifiers, emulsifiers having an oxyethylene group and an oxypropylene group. The average number of moles of the oxyethylene group added is preferably within a range of 5 to 100, and more preferably within a range of 10 to 50. The average number of moles of the oxypropylene group added is preferably within a range of 5 to 50, and more preferably within a range of 10 to 40.

The cloudy point of the nonionic emulsifier (B) is preferably within a range of 40°C to 80°C, and more preferably within a range of 50°C to 80°C, because, with keeping excellent liquid mixture stability, the nonionic emulsifier (B) is sharply coagulated by heating, whereby softer texture can be achieved. Note that the cloudy point of the nonionic emulsifier (B) is determined in accordance with the following method, based on a textbook, Takehiko Fujimoto, "Shin Kaimen Kasseizai Nyumon (New Introduction to Surfactants)" Sanyo Chemical Industries, Ltd., 1992. That is, 5% by mass of an aqueous solution of the nonionic emulsifier is held at a fixed temperature for 30 minutes, and whether the nonionic emulsifier becomes insolubilized in the solution is observed. A point in temperature at which the nonionic emulsifier starts to be insolubilized with an increase in temperature is defined as the cloudy point.

From the viewpoints of achieving more excellent texture and liquid mixture stability, the amount of the nonionic emulsifier (B) mixed-in is preferably within a range of 0.1% by mass to 10% by mass, and more preferably 1% by mass to 6% by mass, with respect to 100 parts by mass of the urethane resin (A) (solid content).

Examples of the water (C) that can be used include ion-exchanged water and distilled water. These types of water may be used alone or in combination of two or more. The content of the water (C) in the urethane resin composition is, for example, within a range of 30% by mass to 90% by mass.

The urethane resin composition according to the present invention includes the urethane resin (A), the nonionic emulsifier (B), and the water (C), as essential components, and may further include other additives, if necessary.

Examples of the other additives that can be used include a coagulant, a urethanizing catalyst, a neutralizer, a silane coupling agent, a thickener, a filler, a thixotropy-imparting agent, a tackifier, a wax, a heat stabilizer, a light stabilizer, a fluorescent brightening agent, a foaming agent, a pigment, a dye, an electrical conductivity-imparting agent, an antistatic agent, a moisture permeability improver, a water repellent, an oil repellent, a hollow foam, a flame retardant, a desiccant, a moisture absorbent, a deodorant, a foam stabilizer, an anti-blocking agent, and an antihydrolysis agent. These additives may be used alone or in a combination of two or more.

As described above, the urethane resin composition according to the present invention includes water, and thus the urethane resin composition is an environment-responsive material. Furthermore, the urethane resin composition is excellent in texture and liquid mixture stability. Hence, the urethane resin composition can be particularly suitably used as a resin for the impregnation of fibrous substrates.

Next, a leather sheet according to the present invention will be described.

The leather sheet is such that a coagulated product of the urethane resin composition is present in a fibrous substrate.

Examples of the fibrous substrate that can be used include fibrous substrates, such as nonwoven fabrics, woven fabrics, and knitted fabrics, each made of polyester fibers, polyethylene fibers, nylon fibers, acrylic fibers, polyurethane fibers, acetate fibers, rayon fibers, polylactic acid fibers, cotton, hemp, silk, wool, glass fibers, carbon fibers, or fiber mixtures thereof.

Examples of a method for producing the leather sheet include a method in which the fibrous substrate is impregnated with the urethane resin composition and subsequently the urethane resin is coagulated.

Examples of a method of impregnating the fibrous substrate with the water dispersion of the urethane resin includes a method in which the fibrous substrate is directly immersed in a tank storing the water dispersion of the urethane resin, and then squeezed using a mangle or the like.

Next, examples of a method of coagulating the urethane resin (A) include: a thermal coagulating method in which the fibrous substrate impregnated with the urethane resin is heated at 50°C to 130°C; and a method in which a treatment using a saturated vapor having a temperature of 100°C or higher (0 MPa to 0.6 MPa) or using a superheated steam having a temperature of 160°C to 190°C is performed. After that, drying may be applied at a temperature of 80°C to 180°C, if necessary.

The leather-like sheet can be used for, for example, shoes, bags, clothes, parts of furniture such as chairs and sofas, automobile interior materials such as car seats and steering wheels, moisture permeable waterproof materials, artificial leather, abrasives, and core materials for felt-tip pens.

On the leather sheet, an intermediate layer, a bonding layer, a skin layer, a surface-treated layer, and the like may be laminated, if necessary.

[Examples]

Hereinafter, the present invention will be described in more detail by way of Examples.

[Example 1]

A four-neck flask equipped with a stirrer, a reflux condenser, a thermometer, and a nitrogen gas introduction tube was charged, under a nitrogen flow, with 400 parts by mass of polycarbonate polyol that is liquid at normal temperature ("DURANOL T5652", manufactured by Asahi Kasei Corp., number average molecular weight: 2,000, hereinafter abbreviated as "Liquid PC (1)"), 6.6 parts by mass of dimethylolpropionic acid (hereinafter abbreviated as "DMPA"), 32 parts by mass of polyoxyethylene polyoxypropylene glycol (number average molecular weight: 1,750, EO/PO = 50/50, hereinafter abbreviated as "EOPO (1)"), and 543 parts by mass of methyl ethyl ketone, and these were uniformly mixed. After that, 105 parts by mass of dicyclohexylmethane diisocyanate (hereinafter abbreviated as "H12MDI") was added to the mixture, and then 0.1 part by mass of bismuth octoate was added thereto. The resultant mixture was allowed to react at 70°C for approximately 1 hour, whereby a methyl ethyl ketone solution of a urethane polymer was obtained. Subsequently, 5.3 parts by mass of triethylamine and 16 parts by mass of an emulsifier of polyoxyethylene polyoxypropylene glycol (the average number of moles of the oxyethylene group added: 25, the average number of moles of the oxypropylene group added: 30, cloudy point: 58°C, hereinafter abbreviated as "EOPO emulsifier (1)") were added to the methyl ethyl ketone solution of the urethane polymer obtained by the above-described method, and mixed. After that, 846 parts by mass of ion-exchanged water was added to the resultant mixture, and 20 parts by mass of isophoronediamine was added thereto, then, methyl ethyl ketone was removed therefrom by evaporation under reduced pressure, whereby a urethane resin composition (X-1) including a urethane resin (A-1) (the acid value of the urethane resin (A-1): 5 mgKOH/g, weight-average molecular weight: 240,000) was obtained.

[Example 2]

A four-neck flask equipped with a stirrer, a reflux condenser, a thermometer, and a nitrogen gas introduction tube was charged, under a nitrogen flow, with 400 parts by mass of polycarbonate polyol that is liquid at normal temperature ("DURANOL GE502", manufactured by Asahi Kasei Corp., number average molecular weight: 2,000, hereinafter abbreviated as "Liquid PC (2)"), 6.6 parts by mass of DMPA, 32 parts by mass of the EOPO (1), and 543 parts by mass of methyl ethyl ketone, and these were uniformly mixed. After that, 105 parts by mass of H12MDI was added to the mixture, and then 0.1 part by mass of bismuth octoate was added thereto. The resultant mixture was allowed to react at 70°C for approximately 1 hour, whereby a methyl ethyl ketone solution of a urethane polymer was obtained. Subsequently, 5.3 parts by mass of triethylamine and 16 parts by mass of the EOPO emulsifier (1) were added to the methyl ethyl ketone solution of the urethane polymer obtained by the above-described method, and mixed. After that, 846 parts by mass of ion-exchanged water was added to the resultant mixture, and 20 parts by mass of isophoronediamine was added thereto, then, methyl ethyl ketone was removed therefrom by evaporation under reduced pressure, whereby a urethane resin composition (X-2) including a urethane resin (A-2) (the acid value of the urethane resin (A-2): 5 mgKOH/g, weight-average molecular weight: 280,000) was obtained.

[Example 3]

A four-neck flask equipped with a stirrer, a reflux condenser, a thermometer, and a nitrogen gas introduction tube was charged, under a nitrogen flow, with 400 parts by mass of the Liquid PC (1), 6.6 parts by mass of DMPA, 32 parts by mass of polyoxyethylene polyoxypropylene glycol (number average molecular weight: 1,400, EO/PO = 75/25, hereinafter abbreviated as "EOPO (2)"), and 544 parts by mass of methyl ethyl ketone, and these were uniformly mixed. After that, 107 parts by mass of H12MDI was added to the mixture, and then 0.1 part by mass of bismuth octoate was added thereto. The resultant mixture was allowed to react at 70°C for approximately 1 hour, whereby a methyl ethyl ketone solution of a urethane polymer was obtained. Subsequently, 5.4 parts by mass of triethylamine and 16 parts by mass of the EOPO emulsifier (1) were added to the methyl ethyl ketone solution of the urethane polymer obtained by the above-described method, and mixed. After that, 850 parts by mass of ion-exchanged water was added to the resultant mixture, and 21 parts by mass of isophoronediamine was added thereto, then, methyl ethyl ketone was removed therefrom by evaporation under reduced pressure, whereby a urethane resin composition (X-3) including a urethane resin (A-3) (the acid value of the urethane resin (A-3): 5 mgKOH/g, weight-average molecular weight: 260,000) was obtained.

[Example 4]

A four-neck flask equipped with a stirrer, a reflux condenser, a thermometer, and a nitrogen gas introduction tube was charged, under a nitrogen flow, with 400 parts by mass of the Liquid PC (1), 6.4 parts by mass of DMPA, 32 parts by mass of polyoxyethylene polyoxypropylene glycol (number average molecular weight: 3,000, EO/PO = 75/25, hereinafter abbreviated as "EOPO (3)"), and 540 parts by mass of methyl ethyl ketone, and these were uniformly mixed. After that, 102 parts by mass of H12MDI was added to the mixture, and then 0.1 part by mass of bismuth octoate was added thereto. The resultant mixture was allowed to react at 70°C for approximately 1 hour, whereby a methyl ethyl ketone solution of a urethane polymer was obtained. Subsequently, 5.2 parts by mass of triethylamine and 16 parts by mass of the EOPO emulsifier (1) were added to the methyl ethyl ketone solution of the urethane polymer obtained by the above-described method, and mixed. After that, 850 parts by mass of ion-exchanged water was added to the resultant mixture, and 20 parts by mass of isophoronediamine was added thereto, then, methyl ethyl ketone was removed therefrom by evaporation under reduced pressure, whereby a urethane resin composition (X-4) including a urethane resin (A-4) (the acid value of the urethane resin (A-4): 5 mgKOH/g, weight-average molecular weight: 300,000) was obtained.

[Example 5]

A four-neck flask equipped with a stirrer, a reflux condenser, a thermometer, and a nitrogen gas introduction tube was charged, under a nitrogen flow, with 400 parts by mass of the Liquid PC (1), 6.6 parts by mass of DMPA, 32 parts by mass of the EOPO (1), and 544 parts by mass of methyl ethyl ketone, and these were uniformly mixed. After that, 105 parts by mass of H12MDI was added to the mixture, and then 0.1 part by mass of bismuth octoate was added thereto. The resultant mixture was allowed to react at 70°C for approximately 1 hour, whereby a methyl ethyl ketone solution of a urethane polymer was obtained. Subsequently, 5.3 parts by mass of triethylamine and 16 parts by mass of an emulsifier of polyoxyethylene polyoxypropylene glycol (the average number of moles of the oxyethylene group added: 20, the average number of moles of the oxypropylene group added: 20, cloudy point: 70°C, hereinafter abbreviated as "EOPO emulsifier (2)") were added to the methyl ethyl ketone solution of the urethane polymer obtained by the above-described method, and mixed. After that, 846 parts by mass of ion-exchanged water was added to the resultant mixture, and 20 parts by mass of isophoronediamine was added thereto, then, methyl ethyl ketone was removed therefrom by evaporation under reduced pressure, whereby a urethane resin composition (X-5) including a urethane resin (A-5) (the acid value of the urethane resin (A-5): 5 mgKOH/g, weight-average molecular weight: 250,000) was obtained.

[Example 6]

A four-neck flask equipped with a stirrer, a reflux condenser, a thermometer, and a nitrogen gas introduction tube was charged, under a nitrogen flow, with 400 parts by mass of the Liquid PC (1), 6.4 parts by mass of DMPA, 32 parts by mass of the EOPO (1), and 535 parts by mass of methyl ethyl ketone, and these were uniformly mixed. After that, 52 parts by mass of H12MDI and 44 parts by mass of isophorone diisocyanate (hereinafter abbreviated as "IPDI") were added to the mixture, and then 0.1 part by mass of bismuth octoate was added thereto. The resultant mixture was allowed to react at 70°C for approximately 1 hour, whereby a methyl ethyl ketone solution of a urethane polymer was obtained. Subsequently, 5.2 parts by mass of triethylamine and 16 parts by mass of the EOPO emulsifier (1) were added to the methyl ethyl ketone solution of the urethane polymer obtained by the above-described method, and mixed. After that, 833 parts by mass of ion-exchanged water was added to the resultant mixture, and 20 parts by mass of isophoronediamine was added thereto, then, methyl ethyl ketone was removed therefrom by evaporation under reduced pressure, whereby a urethane resin composition (X-6) including a urethane resin (A-6) (the acid value of the urethane resin (A-6): 5 mgKOH/g, weight-average molecular weight: 180,000) was obtained.

[Comparative Example 1]

A urethane resin composition (XR-1) including a urethane resin (AR-1) was obtained in the same manner as in Example 1, except that polycarbonate polyol being solid at normal temperature ("ETERNACOLL UH-200", manufactured by Ube Industries, Ltd., number average molecular weight: 2,000, hereinafter, abbreviated as "Solid PC") was used in place of the Liquid PC (1) in Example 1.

[Comparative Example 2]

A four-neck flask equipped with a stirrer, a reflux condenser, a thermometer, and a nitrogen gas introduction tube was charged, under a nitrogen flow, with 400 parts by mass of the Liquid PC (1), 6.6 parts by mass of DMPA, 32 parts by mass of the EOPO (1), 4 parts by mass of trimethylolpropane (hereinafter abbreviated as "TMP"), and 565 parts by mass of methyl ethyl ketone, and these were uniformly mixed. After that, 122 parts by mass of H12MDI was added to the mixture, and then 0.1 part by mass of bismuth octoate was added thereto. The resultant mixture was allowed to react at 70°C for approximately 1 hour, whereby a methyl ethyl ketone solution of a urethane polymer was obtained. Subsequently, 5.3 parts by mass of triethylamine and 16 parts by mass of the EOPO emulsifier (1) were added to the methyl ethyl ketone solution of the urethane polymer obtained by the above-described method, and mixed. After that, 883 parts by mass of ion-exchanged water was added to the resultant mixture, and 24 parts by mass of isophoronediamine was added thereto, then, methyl ethyl ketone was removed therefrom by evaporation under reduced pressure, whereby a urethane resin composition (XR-2) including a urethane resin (AR-2) (the acid value of the urethane resin (AR-2): 5 mgKOH/g, weight-average molecular weight: 290,000) was obtained.

[Comparative Example 3]

A four-neck flask equipped with a stirrer, a reflux condenser, a thermometer, and a nitrogen gas introduction tube was charged, under a nitrogen flow, with 400 parts by mass of the Liquid PC (1), 32 parts by mass of the EOPO (1), and 518 parts by mass of methyl ethyl ketone, and these were uniformly mixed. After that, 86 parts by mass of H12MDI was added to the mixture, and then 0.1 part by mass of bismuth octoate was added thereto. The resultant mixture was allowed to react at 70°C for approximately 1 hour, whereby a methyl ethyl ketone solution of a urethane polymer was obtained. Subsequently, 16 parts by mass of the EOPO emulsifier (1) was added to the methyl ethyl ketone solution of the urethane polymer obtained by the above-described method, and mixed. After that, 802 parts by mass of ion-exchanged water was added to the resultant mixture, and 17 parts by mass of isophoronediamine was added thereto, then, methyl ethyl ketone was removed therefrom by evaporation under reduced pressure, whereby a urethane resin composition (XR-3) including a urethane resin (AR-3) (the acid value of the urethane resin (AR-3): 0 mgKOH/g, weight-average molecular weight: 280,000) was obtained.

[Comparative Example 4]

A four-neck flask equipped with a stirrer, a reflux condenser, a thermometer, and a nitrogen gas introduction tube was charged, under a nitrogen flow, with 400 parts by mass of the Liquid PC (1), 6.6 parts by mass of DMPA, and 504 parts by mass of methyl ethyl ketone, and these were uniformly mixed. After that, 98 parts by mass of H12MDI was added to the mixture, and then 0.1 part by mass of bismuth octoate was added thereto. The resultant mixture was allowed to react at 70°C for approximately 1 hour, whereby a methyl ethyl ketone solution of a urethane polymer was obtained. Subsequently, 6 parts by mass of triethylamine and 16 parts by mass of the EOPO emulsifier (1) were added to the methyl ethyl ketone solution of the urethane polymer obtained by the above-described method, and mixed. After that, 785 parts by mass of ion-exchanged water was added to the resultant mixture, and 19 parts by mass of isophoronediamine was added thereto, then, methyl ethyl ketone was removed therefrom by evaporation under reduced pressure, whereby a urethane resin composition (XR-4) including a urethane resin (AR-4) (the acid value of the urethane resin (AR-4): 5 mgKOH/g, weight-average molecular weight: 310,000) was obtained.

[Comparative Example 5]

A urethane resin composition (XR-5) including a urethane resin (AR-5) was obtained in the same manner as in Example 1, except that the EOPO emulsifier (1) in Example 1 was not used.

[Method for Measuring Number Average Molecular Weight and Weight-Average Molecular Weight]

The number average molecular weight of each of the polyols and the weight-average molecular weight of each of the urethane resins that are used in Examples and Comparative Examples are values determined by GPC under the following conditions.
Measurement Device: High performance GPC ("HLC-8220GPC", manufactured by Tosoh Corporation)
Columns: The following columns manufactured by Tosoh Corporation were connected in series and used.

"TSKgel G5000" (7.8 mm I.D. $\times$ 30 cm) $\times$ 1

"TSKgel G4000" (7.8 mm I.D. $\times$ 30 cm) $\times$ 1

"TSKgel G3000" (7.8 mm I.D. $\times$ 30 cm) $\times$ 1

"TSKgel G2000" (7.8 mm I.D. $\times$ 30 cm) $\times$ 1 Detector: RI (differential refractometer)

Column Temperature: 40°C
Eluent: tetrahydrofuran (THF)
Flow Rate: 1.0 mL/minute
Injection Amount: 100 μL (a tetrahydrofuran solution having a sample concentration of 0.4% by mass)
Standard samples: The following types of standard polystyrene were used to produce a calibration curve.

(Standard Polystyrene)

"TSKgel standard polystyrene A-500", manufactured by Tosoh Corporation
"TSKgel standard polystyrene A-1000", manufactured by Tosoh Corporation
"TSKgel standard polystyrene A-2500", manufactured by Tosoh Corporation
"TSKgel standard polystyrene A-5000", manufactured by Tosoh Corporation
"TSKgel standard polystyrene F-1", manufactured by Tosoh Corporation
"TSKgel standard polystyrene F-2", manufactured by Tosoh Corporation
"TSKgel standard polystyrene F-4", manufactured by Tosoh Corporation
"TSKgel standard polystyrene F-10", manufactured by Tosoh Corporation
"TSKgel standard polystyrene F-20", manufactured by Tosoh Corporation

"TSKgel standard polystyrene F-40", manufactured by Tosoh Corporation
"TSKgel standard polystyrene F-80", manufactured by Tosoh Corporation
"TSKgel standard polystyrene F-128", manufactured by Tosoh Corporation
"TSKgel standard polystyrene F-288", manufactured by Tosoh Corporation
"TSKgel standard polystyrene F-550", manufactured by Tosoh Corporation

[Method for Measuring Acid Value of Urethane Resin (A)]

Each of the urethane resin compositions obtained by using the Syntheses Examples and Comparative Syntheses Examples was dried, and 0.05 g to 0.5 g of the dried and solidified resin particles were weighed into a 300-mL Erlenmeyer flask. Subsequently, approximately 80 mL of a solvent mixture of tetrahydrofuran and ion-exchanged water at a mass ratio [tetrahydrofuran/ion-exchanged water] of 80/20 was added, whereby a mixed solution thereof was obtained.

Next, a phenolphthalein indicator was mixed with the solution mixture. Then, the resultant mixture was titrated with a 0.1-mol/L aqueous potassium hydroxide solution standardized in advance. The acid value (mgKOH/g) of the anionic urethane resin (X) was determined according to the following calculation formula (1) by using the amount of the aqueous potassium hydroxide solution used for the titration.

$$\text{Calculation formula } A = (B \times f \times 5.611)/S \quad (1)$$

In formula (1), A is the acid value (mgKOH/g) of the solid content of the resin; B is the amount (mL) of the 0.1-mol/L aqueous potassium hydroxide solution used for the titration; f is the factor of the 0.1-mol/L aqueous potassium hydroxide solution; S is the mass (g) of the resin particles: and 5.611 is the formula weight of potassium hydroxide (56.11/10).

[Evaluation Method for Liquid Mixture Stability]

Each of the urethane resin compositions obtained in Examples and Comparative Examples was diluted with water to achieve a solid content of 20% by mass, and 1 part by mass of sodium chloride was added with respect to 100 parts by mass of the resultant mixture to obtain a liquid mixture. The obtained liquid mixture was left standing in an atmosphere with a temperature of 40°C for 1 week and evaluated according to the following criteria.

"A": No change in appearance.
"B": Precipitate was observed in small amounts.
"C": Precipitate was observed in large amounts.

[Method for Preparing Impregnated Nonwoven Fabric]

Each of the urethane resin compositions obtained in Examples and Comparative Examples was diluted with water to achieve a solid content of 20% by mass, and 1 part by mass of sodium chloride was added with respect to 100 parts by mass of the resultant mixture to obtain a liquid mixture. A nonwoven fabric formed from 200 g/m$^2$ of polyester fiber was impregnated with the obtained liquid mixture, and squeezed using a mangle to achieve 100% pickup. Subsequently, the nonwoven fabric was left standing in a saturated steam having a temperature of 100°C for 2 minutes, and dried by a dryer at 100°C for 20 minutes, whereby an impregnated nonwoven fabric (leather-like sheet) was prepared.

[Evaluation Method for Texture]

The obtained impregnated nonwoven fabric was evaluated by the tactile impression according to the following criteria.

"A": Soft and excellent flexibility
"B": Slight flexibility
"C": Poor flexibility

[Evaluation Method for Light Resistance]

Using a xenon fadeometer ("SX75P", manufactured by Suga Test Instruments Co., Ltd.), the obtained impregnated nonwoven fabric was irradiated with light of 110 MJ under the conditions of a temperature of 89°C and a humidity of 50%, and visually evaluated according to the following criteria.

"A": No change in appearance.
"B": Slight yellowing occurred.
"C": Significant yellowing occurred.

[Evaluation Method for Hydrolysis Resistance]

The obtained impregnated nonwoven fabric was cured for 5 weeks under the conditions of a temperature of 70°C and a humidity of 95%, and visually evaluated according to the following criteria.

"A": No change in appearance.
"B": Change of luster in appearance occurred.
"C": Change of luster in appearance and stickiness occurred.

[Table 1]

| Table 1 | | Example 1 | Example 2 | Example 3 | Example 4 |
|---|---|---|---|---|---|
| Urethane resin (A) | Raw material | Liquid PC (1) | Liquid PC (2) | Liquid PC (1) | Liquid PC (1) |
| | | DMPA | DMPA | DMPA | DMPA |
| | | EOPO (1) | EOPO (1) | EOPO (2) | EOPO (3) |
| | | H12MDI | H12MDI | H12MDI | H12MDI |
| Nonionic emulsifier (B) | | EOPO emulsifier (1) | EOPO emulsifier (1) | EOPO emulsifier (1) | EOPO emulsifier (1) |
| Liquid mixture stability | | A | A | A | A |
| Texture | | A | A | A | A |
| Light resistance | | A | A | A | A |
| Hydrolysis resistance | | A | A | A | A |

[Table 2]

| Table 2 | | Example 5 | Example 6 | Comparative example 1 | Comparative example 2 |
|---|---|---|---|---|---|
| Urethane resin (A) | Raw material | Liquid PC (1) | Liquid PC (1) | Solid PC | Liquid PC (1) |
| | | DMPA | DMPA | DMPA | DMPA |
| | | EOPO (1) | EOPO (1) | EOPO (1) | EOPO (1) |
| | | H12MDI | H12MDI | H12MDI | H12MDI |
| | | | IPDI | | TMP |
| Nonionic emulsifier (B) | | EOPO emulsifier (2) | EOPO emulsifier (1) | EOPO emulsifier (1) | EOPO emulsifier (1) |
| Liquid mixture stability | | A | A | B | A |
| Texture | | A | A | C | C |
| Light resistance | | A | A | A | A |
| Hydrolysis resistance | | A | A | A | A |

[Table 3]

| Table 3 | | Comparative example 3 | Comparative example 4 | Comparative example 5 |
|---|---|---|---|---|
| Urethane resin (A) | Raw material | Liquid PC (1) | Liquid PC (1) | Liquid PC (1) |
| | | EOPO (1) | DMPA | DMPA |
| | | H12MDI | H12MDI | EOPO (1) |
| | | | | H12MDI |
| | | | | |
| Nonionic emulsifier (B) | | EOPO emulsifier (1) | EOPO emulsifier (1) | |
| Liquid mixture stability | | C | C | C |
| Texture | | A | C | C |
| Light resistance | | A | A | A |
| Hydrolysis resistance | | A | A | A |

It was found that Examples 1 to 6, each being the urethane resin composition according to the present invention, were excellent in liquid mixture stability, texture, light resistance, and hydrolysis resistance.

In contrast, Comparative Example 1, as an aspect produced using the polycarbonate polyol being solid at normal temperature in place of the polycarbonate polyol (a1), was poor in texture.

Comparative Example 2, as an aspect using trimethylolpropane having three hydroxyl groups, was poor in texture.

Comparative Example 3, as an aspect using a urethane resin not having an anionic group, was poor in liquid mixture stability.

Comparative Example 4, as an aspect using a urethane resin not having a nonionic group, was poor in texture and liquid mixture stability.

Comparative Example 5, as an aspect not using the nonionic emulsifier (B), was poor in texture and liquid mixture stability.

**Claims**

1. A urethane resin composition, comprising:

   a urethane resin (A) having an anionic group and a nonionic group, and produced using as a raw material a polycarbonate polyol (a1) that is liquid at normal temperature and not using as a raw material a compound (x2) having three or more hydroxyl groups;
   a nonionic emulsifier (B); and
   water (C).

2. The urethane resin composition according to claim 1, wherein the nonionic group in the urethane resin (A) includes an oxyethylene group and an oxypropylene group.

3. The urethane resin composition according to claim 2, wherein the oxyethylene group and the oxypropylene group are derived from a polyol having an oxyethylene group and an oxypropylene group.

4. The urethane resin composition according to any one of claims 1 to 3, wherein the nonionic emulsifier (B) has an oxyethylene group and an oxypropylene group.

5. A leather sheet, comprising a coagulated product of the urethane resin composition according to any one of claims 1 to 4 present in a fibrous substrate.

**INTERNATIONAL SEARCH REPORT**

| International application No. |
|---|
| PCT/JP2020/034210 |

A. CLASSIFICATION OF SUBJECT MATTER
Int.Cl. C08L75/06(2006.01)i, C08G18/08(2006.01)i, C08G18/44(2006.01)i,
D06N3/14(2006.01)i
FI: C08L75/06, C08G18/08019, C08G18/44, D06N3/14101
According to International Patent Classification (IPC) or to both national classification and IPC

B. FIELDS SEARCHED

Minimum documentation searched (classification system followed by classification symbols)
Int.Cl. C08G18/00-18/87, C08L1/00-101/16, C09D1/00-201/10, C09J1/00-201/10, D06N3/00-3/18

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 2019-81826 A (SEIKO EPSON CORPORATION) 30 May 2019 (2019-05-30), claims, examples (for example, table 1, A12, paragraph [0207]), etc. | 1-5 |
| P, X | WO 2020/111944 A1 (STAHL INTERNATIONAL B.V.) 04 June 2020 (2020-06-04), claims, examples (for example, example 2), etc. | 1-5 |
| P, X | JP 2020-105445 A (NICCA CHEMICAL CO., LTD.) 09 July 2020 (2020-07-09), claims, paragraph [0122], examples (for example, paragraph [0162], table 4, comparative example 9, example 13), etc. | 1-5 |
| A | JP 2016-84463 A (SANYO CHEMICAL IND LTD.) 19 May 2016 (2016-05-19) | 1-5 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 November 2020 | 01 December 2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

| INTERNATIONAL SEARCH REPORT | International application No. |
|---|---|
| Information on patent family members | PCT/JP2020/034210 |

```
JP 2019-81826 A    30 May 2019   (Family: none)

WO 2020/111944 A1  04 June 2020  (Family: none)

JP 2020-105445 A   09 July 2020  (Family: none)

JP 2016-84463 A    19 May 2016   (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007119749 A